# EUROPÄISCHE PATENTANMELDUNG

(11) **EP 4 331 359 A1**
(43) Veröffentlichungstag der Anmeldung: **06.03.2024**
(21) Anmeldenummer: 23192095.0
(22) Anmeldetag: 18.08.2023
(51) Int. Cl.: A01M 29/30, E04D 13/00

(54) **VORRICHTUNG ZUR VERSPERRUNG DES ZUGANGS ZU EINEM GEBÄUDEDACH FÜR TIERE**

(30) Priorität: 18.08.2022 CH 9762022
(71) Anmelder: HTR Protect GmbH, 4466 Ormalingen (CH)
(72) Erfinder: Heuberger, Mirco, 4448 Läufelfingen (CH); Thommen, Alex Lucas, 4460 Gelterkinden (CH)
(74) Vertreter: Kieffer, Valentin

(57) **Zusammenfassung**

Vorrichtung zur Versperrung des Zugangs zu einem Gebäudedach für Tiere, umfassend ein im wesentlichen flaches Schild (10) mit einer Vorder- (V) und einer Rückseite (R), einem oberen (O) und einem unteren Bereich (U) und einer mit dem Schild (10) fest verbundenen Befestigungsvorrichtung (30) im unteren Bereich (U), und einer mit dem Schild (10) ebenfalls fest verbundenen Einhängevorrichtung (20) im oberen Bereich (O), wobei die Einhängevorrichtung (20) zum Beispiel als abgebogene Verlängerung ausgebildet ist und die Befestigungsvorrichtung (30) beispielsweise aus einem Bügel 31 und einem durch diesen Bügel (31) geführten Band (32) besteht.

## Beschreibung

Die vorliegende Erfindung betrifft eine Vorrichtung zur Versperrung des Zugangs zu einem Gebäudedach für Tiere gemäss Patentanspruch 1.

Gebäudehüllen wie Dächer und Fassaden haben idealerweise eine lange Lebensdauer und benötigen wenig bis gar keinen Unterhalt. Entsprechend werden diese über Jahre hinweg nicht überprüft und von aussen unsichtbare Schäden unterhalb der äussersten Schicht der Gebäudehülle können unbemerkt entstehen und nach einiger Zeit zu erheblichen Folgeschäden führen.

Tiere wie zum Beispiel Marder, die durch Öffnungen an den Rändern und Übergängen der Gebäudehülle eindringen, können erhebliche Schäden an der darunter angeordneten Isolationsschicht und sogar an der Struktur oder Konstruktion der Gebäudehülle verursachen. Geräusche aufgrund der Bewegung der Tiere oder Gerüche verwesender Beutetiere und Fäkalien können noch weitere unerwünschte Störungen darstellen. Idealerweise wird verhindert, dass diese Tiere Zugang zum Dach erhalten, damit weder ein Schaden verursacht werden kann, noch störende Geräusche oder eine Verschmutzung des Dach vorkommen kann. Diese Tiere verschaffen sich oft Zugang zum Gebäudedach indem sie am Fallrohr hochklettern und durch festhalten an der Dachrinne sich hochziehen können.

In der DE 201 209 963 U1 wird eine Vorrichtung vorgestellt, welche aus vorgefertigten Kontourblechen besteht, die mittels einer Kombination von Klammern und Verschrauben fixiert werden um den Zugang für Tiere komplett abzudichten.

In der DE 203 04 349 U1 wird ein trichterförmiges Blech beschrieben, welches am Ablaufrohr befestigt wird, um ein Hochklettern von Waschbären zu verhindern.

Den bekannten Vorrichtungen gemeinsam ist die aufwändige Montage sowie die Tatsache, dass die Optik des Gebäudes nachteilig beeinflusst wird.

Die vorliegende Erfindung stellt sich nunmehr die Aufgabe, eine Vorrichtung zur Versperrung des Zugangs zu einem Gebäudedach für Tiere bereitzustellen, welche einfach und flexibel zu montieren ist, individuell gestaltet werden kann, um optisch optimal in das Gebäudebild hineinzupassen und den Zugang zum Gebäudedach optimal verhindert.

Diese Aufgabe löst eine Vorrichtung zur Versperrung des Zugangs zu einem Gebäudedach für Tiere mit den Merkmalen des Patentanspruches 1. Weitere Merkmale und Ausführungsbeispiele gehen aus den abhängigen Ansprüchen hervor und deren Vorteile sind in der nachfolgenden Beschreibung erläutert.

### Zeichnungen

- Fig 1: Ansicht der Vorderseite der Vorrichtung
- Fig 2: Ansicht der Rückseite der Vorrichtung mit der Befestigungsvorrichtung
- Fig 3a,3b: Seitenansicht der Vorrichtung mit Ausführungsbeispielen für die Einhängevorrichtung
- Fig 4: Seitenansicht der Vorrichtung mit der an der Dachrinne einhängten Einhängevorrichtung, sowie der am Fallrohr befestigten Befestigungsvorrichtung

Die Figuren stellen mögliche Ausführungsbeispiele dar, welche in der nachfolgenden Beschreibung erläutert werden.

Die erfindungsgemässe Vorrichtung umfasst ein im wesentlichen flaches Schild 10 mit einer Vorder- V und einer Rückseite R, einem oberen O und einem unteren Bereich U und einer mit dem Schild 10 im unteren Bereich U fest verbundenen Befestigungsvorrichtung 30 mit welchem die Vorrichtung an einem Fallrohr befestigt werden kann. Zusätzlich ist am Schild 10 im oberen O Bereich eine Einhängevorrichtung 20 angebracht, damit die Vorrichtung in der Dachrinne eingehängt werden kann. Durch Einhängen der Vorrichtung in der Dachrinne und anschliessende Befestigung am Fallrohr wird die Vorrichtung mit wenigen einfachen Handgriffen und ohne zusätzliches Werkzeug angebracht und verhindert so, dass ein Tier, welches am Fallrohr hochklettert die Dachrinnen erreichen kann um sich auf das Dach zu begeben.

Das Schild 10 kann eine beliebige Form aufweisen, wobei es von Vorteil ist, wenn die seitliche Ausdehnung genügend gross ist, damit ein Tier nicht seitlich am Schild 10 vorbei trotzdem die Dachrinne erreichen kann. Das Schild 10 kann z.B: rechteckig, rund, oval oder als Polygon gestaltet sein, wobei je nach Gebäude eine andere Form optisch besser passt. Das Schild 10 kann zudem mittels Stanzen oder Ausschneiden mit Öffnungen versehen werden, welche optimal auf das Aussehen des Gebäudes abgestimmt werden können. In einer weiteren Gestaltungsform kann das Schild 10 auch mit einem Aufkleber versehen werden oder mit einer zur Fassadenfarbe des Gebäudes passenden Farbe angestrichen werden.

Das Material des Schildes 10 ist idealerweise fest, so dass es nur mit Mühe umgebogen werden kann, wobei wetterbeständige Materialien wie Kupfer, Hartplastik oder andere Metalle bevorzugt werden. Das Schild 10 kann auch leicht gebogen sein, damit es sich im unteren Bereich U optimal an das Fallrohr anpasst.

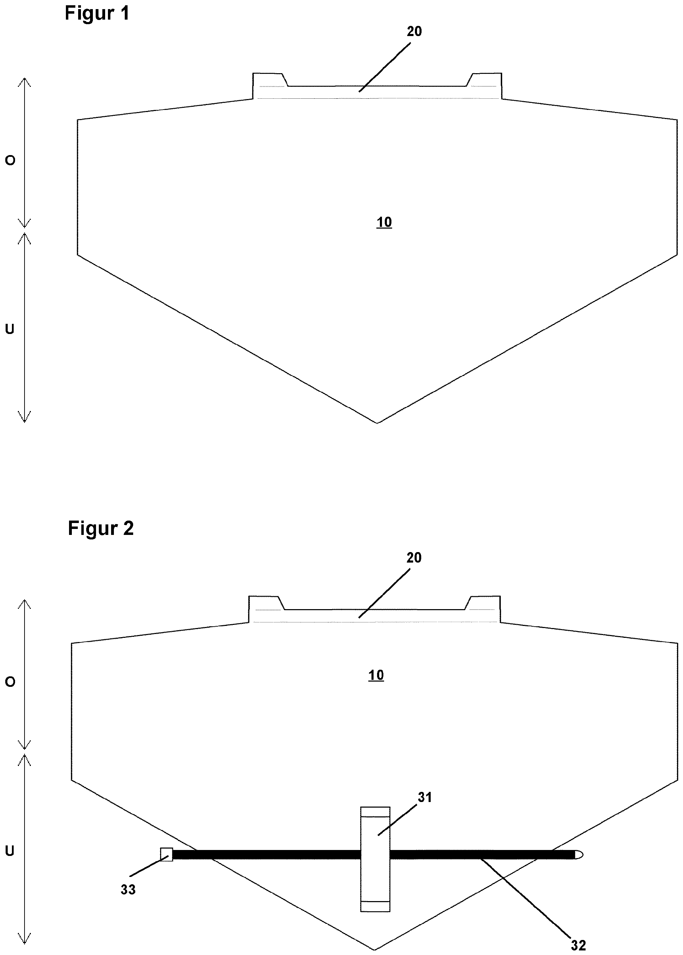

In einer bevorzugten Ausführungsform ist die Einhängevorrichtung 20 als umbiegbare Verlängerung am oberen Ende des Schildes 10 ausgebildet, wobei die Verlängerung in Längsrichtung des Schildes 10 sich über mindestens einen Bereich von 10 mm oder mehr erstreckt. Besonders vorteilhaft ist es die Einhängevorrichtung 20 symmetrisch in der Mitte der Längsrichtung des Schildes 10 anzuordnen, wobei an den beiden äusseren Enden die Einhängevorrichtung 20 eine grössere Ausdehnung aufweist als im mittleren Bereich, wie in Figur 1 abgebildet.

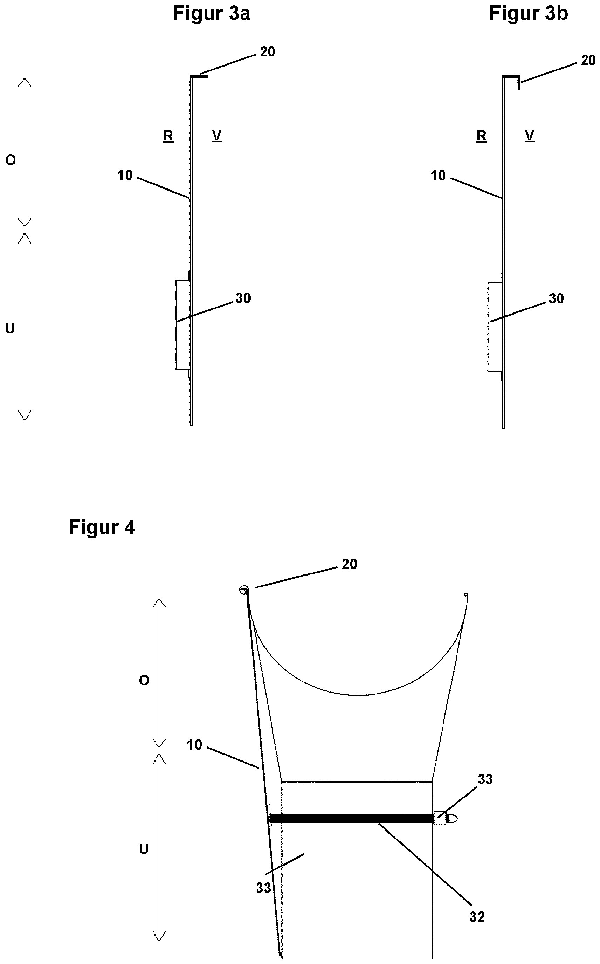

Anstelle einer Verlängerung des Schildes 10 am oberen Ende, kann die Einhängevorrichtung 20 auch aus einem separaten Teil bestehen, welches durch Schweissen, Kleben, Nieten oder Verschraubung im oberen Bereich des Schildes 10 mit diesem fest verbunden ist. Die Einhängevorrichtung 20 umfasst in einer Ausführungsvariante mindestens einen Bereich, welcher gegenüber dem Schild 10 einen Winkel von ungefähr 90° gegen die Vorder- V oder Rückseite R aufweist auf der Vorderseite V angebracht, wie in Figur 3a gezeigt. In Figur 3b wird eine weitere Ausführungsform gezeigt, wobei die Einhängevorrichtung 20 aus zwei jeweils um ungefähr 90° abgebogenen Teilen besteht.

Bevorzugt befindet sich der abgebogene Teil der Einhängevorrichtung 20 auf der Vorderseite V, so dass diese, wie in Figur 4 dargestellt in die äussere Abkantung der Dachrinne eingehängt werden kann.

Im unteren Bereich des Schildes 10 auf der Rückseite R ist eine Befestigungsvorrichtung 30 angebracht welche durch Schweissen, Kleben, Nieten oder Verschraubung fest mit dem Schild 10 verbunden ist. In einer besonders vorteilhaften Ausführung umfasst die Befestigungsvoreichung 30 einen Bügel 31, welcher in vertikaler Ausrichtung mit dem Schild 10 ungefähr in der Mitte verbunden ist, wie in Figur 2 gezeigt.

In einer anderen Variante der Erfindung umfasst die Befestigungsvorrichtung 30 ein Band 32 mit einer Sicherung 33, wobei das Band 32 mittels der Sicherung 33 um ein rohrförmiges Objekt ohne zusätzliches Werkzeug befestigbar ist. In Figur 2 wird eine Ausführungsform gezeigt in welcher das Band 32 und der Bügel 31 kombiniert werden indem das Band 32 durch den Bügel 31 am Schild 10 geführt ist.

Besonders vorteilhaft wird das Band durch einen Kabelbinder mit einer Sicherung 33 gebildet, so dass die Befestigung am Fallrohr möglichst einfach und ohne Werkzeug erfolgen kann und trotzdem genügend festgemacht werden kann, dass sich die Vorrichtung nicht mehr verschieben lässt.

Die Verwendung eines Kabelbinders hat den zusätzlichen Vorteil, dass dieser bei Bedarf einfach mit einem Messer durchgeschnitten werden kann, falls die Vorrichtung wieder entfernt werden soll. Die Entfernung der Vorrichtung kann zum Beispiel aus Wartungs- oder Unterhaltsgründen erfolgen.

## Patentansprüche

1. Vorrichtung zur Versperrung des Zugangs zu einem Gebäudedach für Tiere, umfassend:
ein im wesentlichen flaches Schild (10) mit einer Vorder-(V) und einer Rückseite (R), einem oberen (O) und einem unteren Bereich (U) und
einer mit dem Schild (10) fest verbundenen
Befestigungsvorrichtung (30),
**dadurch gekennzeichnet, dass**
das Schild (10) im oberen (O) Bereich eine
Einhängevorrichtung (20) umfasst und die
Befestigungsvorrichtung (30) im unteren Bereich (U) des Schildes (10) angebracht ist.

2. Vorrichtung gemäss Anspruch 1,
**dadurch gekennzeichnet, dass**
die Einhängevorrichtung (20) als umbiegbare Verlängerung am oberen Ende des Schildes (10) ausgebildet ist, wobei die Verlängerung sich in Längsrichtung des Schildes (10) über mindestens einen Bereich von 10 mm erstreckt.

3. Vorrichtung gemäss Anspruch 1,
**dadurch gekennzeichnet, dass**
die Einhängevorrichtung (20) im oberen Bereich des Schildes (10) auf der Vorderseite (V) angebracht und durch Schweissen, Kleben, Nieten oder Verschraubung fest damit verbunden ist.

4. Vorrichtung gemäss Anspruch 1,
**dadurch gekennzeichnet, dass**
die Einhängevorrichtung (20) mindestens einen Bereich umfasst, welche gegenüber dem Schild (10) einen Winkel von ungefähr 90° gegen die Vorder- (V) oder Rückseite (R) aufweist.

5. Vorrichtung gemäss Anspruch 1,
**dadurch gekennzeichnet, dass**
die Einhängevorrichtung (20) in Längsrichtung des Schildes (10) symmetrisch ausgebildet ist.

6. Vorrichtung gemäss Anspruch 1,
**dadurch gekennzeichnet, dass**
die Befestigungsvorrichtung (30) im unteren Bereich des Schildes (10) auf der Rückseite (R) angebracht und durch Schweissen, Kleben, Nieten oder Verschraubung fest damit verbunden ist.

7. Vorrichtung gemäss Anspruch 6,
**dadurch gekennzeichnet, dass**
die Befestigungsvoreichung (30) einen Bügel (31) umfasst, welcher in vertikaler Ausrichtung mit dem Schild (10) verbunden ist.

8. Vorrichtung gemäss Anspruch 6,
**dadurch gekennzeichnet, dass**
die Befestigungsvorrichtung (30) ein Band (32) mit einer Sicherung (33) umfasst, wobei das Band (32) mittels der Sicherung (33) um ein rohrförmiges Objekt ohne zusätzliches Werkzeug befestigbar ist.

9. Vorrichtung gemäss den Ansprüchen 7 und 8,
**dadurch gekennzeichnet, dass**
das Band (32) durch den Bügel (31) am Schild (10) führbar ist.

10. Vorrichtung gemäss Anspruch 8,
**dadurch gekennzeichnet, dass**
das Band (32) ein Kabelbinder ist.
